# EUROPÄISCHE PATENTSCHRIFT

(11) **EP 2 250 010 B1**
(45) Veröffentlichungstag und Bekanntmachung des Hinweises auf die Patenterteilung: **20.07.2016**
(21) Anmeldenummer: 09720724.5
(22) Anmeldetag: 09.03.2009
(51) Int. Cl.: B29C 45/14, G01D 11/14, H01R 4/22

(54) **FÜHLER ZUM ERFASSEN EINER PHYSIKALISCHEN GRÖSSE UND VERFAHREN ZUR HERSTELLUNG DES FÜHLERS**
SENSING DEVICE FOR DETECTING A PHYSICAL QUANTITY AND METHOD FOR PRODUCING SAID SENSOR
CAPTEUR POUR L'ENREGISTREMENT D'UNE GRANDEUR PHYSIQUE ET PROCÉDÉ DE FABRICATION DE CAPTEUR

(30) Priorität: 13.03.2008 DE 102008014091; 19.06.2008 DE 102008029192
(43) Veröffentlichungstag der Anmeldung: 17.11.2010
(73) Patentinhaber: Epcos AG, 81669 München (DE)
(72) Erfinder: KLOIBER, Gerald, 8073 Feldkirchen (AT); STRALLHOFER, Heinz, 8530 Deutschlandsberg (AT)
(74) Vertreter: Epping - Hermann - Fischer
(86) Internationale Anmeldenummer: PCT/EP2009/052724
(87) Internationale Veröffentlichungsnummer: WO 2009/112457

(56) Entgegenhaltungen:
- EP-A- 0 712 709
- EP-A- 1 262 779
- EP-A- 1 830 619
- DE-A1- 2 535 265
- DE-A1- 4 228 888
- FR-A- 2 864 700
- JP-A- 11 186 304
- US-A- 6 155 114
- US-A- 6 157 186
- US-B1- 6 334 361

## Beschreibung

Die Erfindung betrifft einen Fühler zum Erfassen einer physikalischen Größe, beispielsweise zum Erfassen der Temperatur. Ferner betrifft die Erfindung ein Verfahren zur Herstellung des Fühlers.

Aus der Druckschrift DE 4423985 A1 ist ein Verfahren zur Herstellung eines Temperatursensors bekannt. Aus der Druckschrift US 6,334,361 B1 ist ein Verfahren zur Herstellung eines Sensors bekannt.

Eine zu lösende Aufgabe besteht darin, einen Fühler anzugeben, der besonders leicht miniaturisiert werden kann.

Es wird ein Fühler zum Erfassen einer physikalischen Größe angegeben, der ein Sensorelement mit einer Umhüllung aufweist. Die Umhüllung wird von einem Formteil und einer Spritzgussmasse gebildet. Das Sensorelement ist in das Formteil eingelegt und von der Spritzgussmasse umspritzt, so dass das Formteil formschlüssig mit der Spritzgussmasse verbunden ist.

Dabei ist ausdrücklich der Fall mit umfasst, dass das Sensorelement nicht über seine gesamte Oberfläche von der Spritzgussmasse umspritzt ist. Beispielsweise kann das Sensorelement mit einem Teil seiner Oberfläche am Formteil anliegen und hier nicht von Spritzgussmasse umgeben sein. Ebenso ist der Fall umfasst, dass das Formteil nicht über seine gesamte Oberfläche von der Spritzgussmasse umspritzt ist, sondern dass Teile der Oberfläche des Formteils freiliegen und somit einen Teil der Außenkontur des Fühlers bilden.

Vorzugsweise liegt die Umhüllung über die gesamte Oberfläche des Sensorelements formschlüssig am Sensorelement an. Hierbei können Teile der Umhüllung von der Spritzgussmasse und Teile der Umhüllung vom Formteil gebildet werden. Die Umhüllung sollte das Sensorelement spaltfrei umgeben. Insbesondere sollten sich keine Spalte zwischen der Umhüllung und dem Sensorelement befinden. Ein Vorhandensein von Spalten kann die korrekte Erfassung der physikalischen Größe erschweren oder unmöglich machen. Beispielsweise kann es aufgrund von Spalten zu einer ungleichmäßigen Temperaturverteilung an der Oberfläche des Sensorelements kommen, so dass ein Temperaturfühler die Temperatur nicht korrekt erfassen kann.

In einer bevorzugten Ausführungsform ist das Sensorelement geeignet, die Feuchtigkeit oder die Temperatur der Umgebung zu fühlen. Beispielsweise kann es sich bei dem Sensorelement um einen NTC-Widerstand oder auch um einen PTC-Widerstand handeln.

Eine Umhüllung des Sensorelementes dient vor allem der Kapselung und dem Schutz des Sensorelements vor Umwelteinflüssen und mechanischer Belastung. Insbesondere ist es vorteilhaft, wenn die Umhüllung das Sensorelement oder weitere Bestandteile des Fühlers vor eindringendem Wasser beziehungsweise eindringender Feuchte schützt.

Das Sensorelement ist vorzugsweise mittels Anschlusselementen so ausgestaltet, dass es von außen elektrisch kontaktierbar ist. Beispielsweise kann mittels der Anschlusselemente der elektrische Widerstand des Sensorelements gemessen werden, was im Fall von NTC-Sensoren oder auch PTC-Sensoren einen direkten Rückschluss auf die Temperatur des Sensorelements zulässt.

Dementsprechend ist das Sensorelement besonders bevorzugt als bedrahtetes und umhülltes Bauelement ausgeführt. Das Sensorelement kann an Anschlusselementen, beispielsweise Leitungen, durch Löten, Schweißen oder andere geeignete Verfahren befestigt werden.

Bei den Anschlusselementen kann es sich vorzugsweise um flexible Kabel mit einfacher Isolierung oder um flexible Kabel mit doppelter Isolierung handeln.

Weist der Fühler Anschlusselemente auf, so ist vorzugsweise mindestens der Bereich der Schnittstelle zwischen Anschlusselement und Sensorelement in das Formteil eingelegt und von Spritzgussmasse umspritzt. Dabei ist auch hier der Fall mit umfasst, dass dieser Bereich nicht vollständig von Spritzgussmasse umgeben ist, sondern eine Umhüllung aufweist, die von Formteil und Spritzgussmasse gebildet wird.

Die Spritzgussmasse kann vorzugsweise mittels Spritzgusstechnologie aufgebracht werden. Dadurch kann eine feuchtedichte Verbindung, beispielsweise zwischen den Anschlusselementen und dem Sensorelement des Fühlers, hergestellt werden.

Vorzugsweise ist das Formteil derart ausgestaltet, dass es einen Hohlraum begrenzt, in den das Sensorelement eingelegt ist. Beispielsweise kann das Formteil in Form einer zylindrischen Hülse ausgeführt sein. Darüber hinaus ist es aber auch möglich, das Formteil in Form einer Halbschale oder einer 3/4-kreisförmigen Schale auszuführen. Letztlich ist für das Formteil jede Form geeignet, in die das Sensorelement eingeschoben beziehungsweise eingelegt werden kann.

In einer bevorzugten Ausführungsform des Fühlers liegt das Sensorelement mit seiner Oberfläche so am Formteil an, dass das Sensorelement die Oberfläche des Formteils berührt.

Gemäß einer anderen Ausführungsform kann das Sensorelement aber auch von der Oberfläche des Formteils beabstandet sein.

In diesem Fall ist der Zwischenraum beispielsweise mit Spritzgussmasse gefüllt oder stellt einen Luftspalt dar.

Das Material des Formteils wird vorzugsweise so gewählt, dass es das gleiche Material ist, wie die Spritzgussmasse.

Es wird darüber hinaus ein Verfahren nach Anspruch 6 zur Herstellung des Fühlers angegeben.

Bei einem Verfahren zur Herstellung des Fühlers wird das Sensorelement in das Formteil eingelegt. Anschließend erfolgt die Positionierung dieser Anordnung aus Sensorelement und Formteil in der Spritzgussform. Anschließend wird Spritzgussmasse in die Spritzgussform eingespritzt, sodass das Sensorelement zumindest teilweise von der Spritzgussmasse umhüllt ist.

Vorzugsweise wird das Sensorelement bereits mit Anschlussleitungen verbunden, bevor es in das Formteil eingelegt wird. In diesem Fall ist es besonders vorteilhaft, wenn mindestens der Bereich der Schnittstelle zwischen Sensorelement und Anschlussleitung in das Formteil eingelegt wird.

Nach dem Abkühlen der Spritzgussform und der Spritzgussmasse kann eine Entformung stattfinden, und das so erhaltene Produkt gegebenenfalls zu einem fertigen Fühler weiter verarbeitet werden.

Vorzugsweise ist für das Umspritzen eine zweiteilige Spritzgussform vorgesehen, umfassend eine Unterform und eine Oberform. Beispielsweise kann das Sensorelement zusammen mit dem Formteil in die Unterform eingelegt werden, so dass das Formteil auf den Boden der Unterform aufliegt und das Sensorelement auf der Oberseite des Formteils aufliegt. Das Einspritzen der Spritzgussmasse kann dann von der Seite der Oberform her geschehen. Vorzugsweise wird hierzu der Anspritzpunkt so gewählt, dass durch die einströmende Spritzgussmasse das Sensorelement gegen das Formteil und mittelbar gegen die Unterform gedrückt wird.

Mit Hilfe des Formteils kann erreicht werden, dass die Mindestdicke der Umhüllung des Fühlers gleich der Dicke des Formteils ist. Somit können Beschädigungen aufgrund von Umwelteinflüssen reduziert werden.

Der obere Abstand des Sensorelements zur Außenseite der Umhüllung kann durch eine entsprechende Wahl der Dimensionierung der Oberform erreicht werden.

Besonders bevorzugt stellt das Formteil nach Beendigung des Einspritzvorgangs einen Teil der Außenkontur des Fühlers dar.

Das Formteil kann insbesondere als Einlegeteil verwendet werden, das heißt, dass zunächst das Formteil in die Unterform eingelegt wird und erst anschließend das Sensorelement in das Formteil eingelegt wird.

Das Formteil wird auch als Zentrierhilfe verwendet, in dem es durch eine geeignete Anordnung innerhalb der Spritzgussform im Zusammenwirken mit einer geeigneten Wahl der Position des Anspritzpunktes dafür sorgt, dass während des Einspritzens der Spritzgussmasse in die Spritzgussform ein Verrutschen des Sensorelements im Innern der Spritzgussform verhindert wird. Insbesondere kann verhindert werden, dass das Sensorelement an den Rand der Spritzgussform gedrängt wird, was zu unzulässig dünnen Umhüllungen an der Außenseite des Sensorelements führen würde.

Insbesondere ist es bevorzugt, dass der Anspritzpunkt während des Spritzgussprozesses so gewählt wird, dass das Sensorelement gegen das Formteil gedrückt wird und so in einer stabilen Position verharrt, wobei das Formteil so geformt ist, dass ein stabiles Gleichgewicht erreicht werden kann.

In einer bevorzugten Ausführungsform ist die Spritzgussform so geformt, dass nach dem Einlegen des Formteils die Außenseite des Formteils formschlüssig an der Spritzgussform anliegt. Beispielsweise ist eine Unterform der Spritzgussform als Halbschale ausgeführt und so dimensioniert, dass das Formteil formschlüssig darin eingelegt werden kann. In einer Ausführungsform liegt das Formteil so an der Spritzgussform an, dass es dadurch in einer Richtung quer zu seiner Längsachse fixiert wird.

Alternativ oder zusätzlich dazu kann die Spritzgussform stufenförmige Vertiefungen aufweisen, in die das Formteil eingelegt werden kann. Dadurch soll ebenfalls ein Verrutschen des Formteils in der Spritzgussform verhindert werden. Beispielsweise sind die stufenförmigen Vertiefungen so in einer Unterform angeordnet, dass das Formteil nicht entlang seiner Längsachse verrutschen kann.

Durch die Fixierung des Formteils in der Spritzgussform und die Zentrierung des Sensorelements im Formteil kann sichergestellt werden, dass das Sensorelement während des Einspritzvorgangs nicht in der Spritzgussform verrutscht.

Mittels des beschriebenen Verfahrens kann die Dicke der Umhüllung sicher eingestellt werden. Insbesondere ist es nicht nötig, weitere Umhüllungsschichten aufzubringen, wie es in einem mehrstufigen Einspritzverfahren durchgeführt wird, um die Mindestdicke der Umhüllung an allen Stellen sicherzustellen. Das beschriebene Verfahren ermöglicht somit eine Miniaturisierung des Fühlers.

Im Folgenden wird der Fühler und das Verfahren zur Herstellung des Fühlers anhand von Ausführungsbeispielen und den dazugehörigen Figuren näher erläutert:
- Figur 1: zeigt einen Fühler in einem schematischen Querschnitt senkrecht zur Längsachse des Formteils.
- Figur 2: zeigt ein Sensorelement in einer perspektivischen Ansicht.
- Figur 3A: zeigt ein Spritzgussverfahren zur Herstellung des Fühlers in einem Querschnitt senkrecht zur Längsachse des Formteils.
- Figur 3B: zeigt ein Spritzgussverfahren zur Herstellung des Fühlers in einem Querschnitt entlang der Längsachse des Formteils.
- Figur 4: zeigt einen fertig hergestellten Fühler.

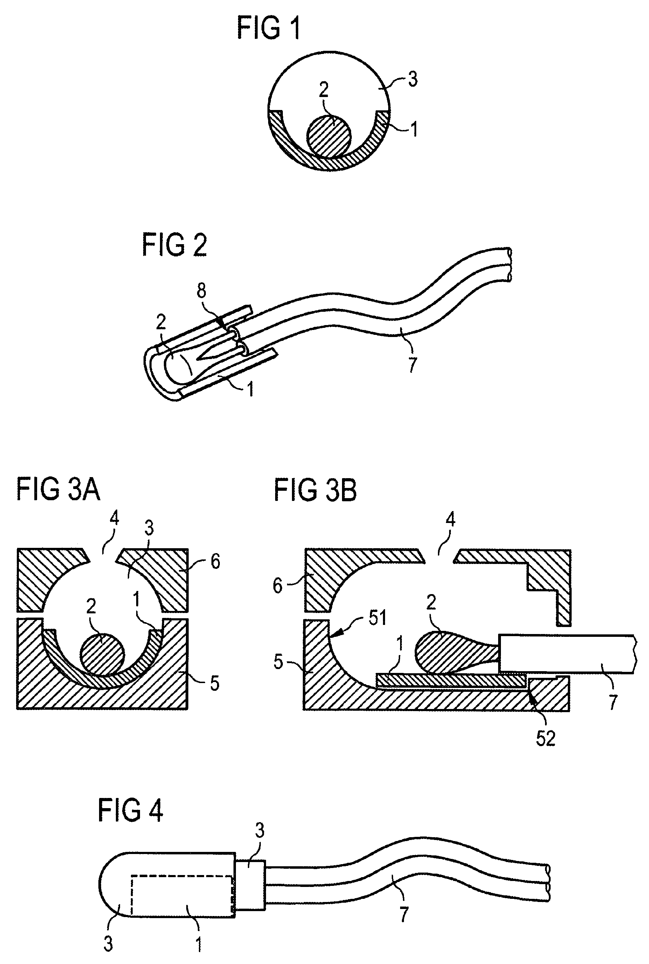

Figur 1 zeigt ein Sensorelement 2, das in ein Formteil 1 eingelegt ist. Das Sensorelement 2 weist eine Umhüllung auf, die vom Formteil 1 und von der Spritzgussmasse 3 gebildet wird. Das Sensorelement 2 liegt auf dem Formteil 1 auf und ist über seine gesamte Oberfläche formschlüssig von der Umhüllung umgeben. Die Umhüllung umgibt das Sensorelement 2 somit spaltfrei. Die Außenseite des Formteils 1 ist dabei nicht von Spritzgussmasse umhüllt und bildet so einen Teil der Außenkontur des von Sensorelement 2, Formteil 1 und Spritzgussmasse 3 gebildeten Fühlers. Die minimale Dicke der Umhüllung entspricht der Dicke des Formteils 1.

Figur 2 zeigt ein 3/4-schalenförmiges Formteil 1, das als Einlegeteil verwendet wird. Das Sensorelement 2 wird bereits vor dem Einlegen in das Formteil 1 mit einem Anschlusselement 7 verbunden. Das Sensorelement 2 wird so in das Formteil 1 eingelegt, dass insbesondere die Schnittstelle 8 zwischen Sensorelement 2 und Anschlusselement 7 in das Formteil 1 eingebettet ist und nach dem Einspritzvorgang eine Umhüllung aufweist, die von der Spritzgussmasse und vom Formteil 1 gebildet wird.

Figur 3A zeigt den Spritzgussvorgang zur Herstellung des Fühlers. Es ist eine Unterform 5 vorgesehen, in die das Formteil 1 eingelegt wird. Die Innenseite der Unterform 5 ist so geformt, dass das Formteil 1 mit seiner Außenseite formschlüssig an der Unterform 5 anliegt. Durch den formschlüssigen Kontakt wird ein Verrutschen quer zur Längsachse des Formteils 1 in der Unterform 5 verhindert.

Das Sensorelement 2 wird in den vom Formteil 1 gebildeten Hohlraum eingelegt. Durch geeignetes Anordnen der Oberform 6 wird eine Spritzgussform gebildet, wobei in der Oberform 6 ein Anspritzpunkt 4 vorgesehen ist, durch den die Spritzgussmasse 3 in die Spritzgussform 5, 6 eingespritzt wird. Durch geeignete Wahl der Spritzgussform und des Formteils im Zusammenspiel mit der Wahl der Position des Anspritzpunktes kann erreicht werden, dass beim Einspritzen der Spritzgussmasse das Sensorelement nicht seitlich oder nach vorne oder hinten verrutscht. Somit kann ein definierter Abstand zwischen dem Sensorelement und der Außenseite des Fühlers gewährleistet werden.

Figur 3B zeigt einen Spritzgussvorgang zur Herstellung des Fühlers in einem Querschnitt entlang der Längsachse des Formteils. Die Spritzgussform 5, 6 weist ein abgerundetes Kopfende 51 auf, wodurch ein Verrutschen des Formteils 1 nach vorne, d. h. in Richtung dieses Kopfendes 51 verhindert wird. Auf diese Weise soll erreicht werden, dass das Sensorelement 2 an seinem Kopfende von Spritzgussmasse 3 umhüllt wird. Die Einlegeposition des Formteils 1 wird zusätzlich durch kleine Stufen 52 im Durchmesser der Unterform 5 definiert. Dadurch wird ein Verrutschen des Formteils 1 nach hinten verhindert. Das Formteil 1 ist somit entlang der Längsachse der Formteils 1 in der Spritzgussform 5, 6 fixiert.

Die Spritzgussform 5, 6 muss nicht alle hier gezeigten Merkmale aufweisen. Beispielsweise kann die Fixierung des Formteils 1 in axialer Richtung auch nur durch ein abgerundetes Kopfende oder durch eine geeignete Wahl der Position des Anspritzpunktes erreicht werden.

Figur 4 zeigt einen fertigen Fühler, der beispielsweise mittels des in den Figuren 3A und 3B dargestellten Spritzgussvorganges hergestellt wurde. Das Formteil 1 bildet einen Teil der Außenkontur des Fühlers. Da das Formteil 1 und die Spritzgussmasse 3 aus demselben Material gebildet sind, setzt sich das Formteil 1 optisch nicht von der Spritzgussmasse 3 ab und ist deshalb nur gestrichelt eingezeichnet. Der Fühler weist ein abgerundetes Kopfende auf, das von Spritzgussmasse 3 gebildet wird. Das abgerundete Kopfende resultiert aus der Innenform der verwendeten Spritzgussform 5, 6. Weiterhin weist der Fühler eine stufenförmige Kontur auf. Diese Kontur ergibt sich aus einer entsprechenden Stufe in der Spritzgussform 5, 6.

Darüber hinaus ist es allerdings auch möglich, das Formteil so auszuführen, dass die Länge des Formteils identisch ist mit der Länge des fertigen Fühlers, das heißt, dass sich das Formteil über die gesamte Länge des durch die Spritzgussmasse 3 gebildeten Körpers erstreckt.

### Bezugszeichenliste

- 1: Formteil
- 2: Sensorelement
- 3: Spritzgussmasse
- 4: Anspritzpunkt
- 5: Unterform
- 51: abgerundetes Kopfende
- 52: stufenförmige Vertiefung
- 6: Oberform
- 7: Anschlusselemente
- 8: Schnittstelle

## Patentansprüche

1. Fühler zum Erfassen einer physikalischen Größe, aufweisend ein Sensorelement (2), das in ein Formteil (1) eingelegt ist, wobei das Sensorelement (2) eine Umhüllung aufweist, die vom Formteil (1) und einer Spritzgussmasse (3) gebildet wird, **dadurch gekennzeichnet, dass** das Formteil (1) als Zentrierhilfe ausgebildet ist, indem es mit einer geeigneten Wahl der Position des Anspritzpunktes dafür sorgt, dass während des Einspritzens der Spritzgussmasse (3) ein Verrutschen des Sensorelements (2) verhindert wird.

2. Fühler nach Anspruch 1,
wobei das Formteil (1) einen Teil der Außenkontur des Fühlers bildet.

3. Fühler nach einem der Ansprüche 1 oder 2,
bei dem das Sensorelement (2) mit einem Anschlusselement (7) verbunden ist und wobei die Schnittstelle (8) zwischen Sensorelement (2) und Anschlusselement (7) in das Formteil (1) eingelegt ist.

4. Fühler nach einem der Ansprüche 1 bis 3,
wobei das Formteil (1) die Form eines Rohres, einer rohrförmigen Halbschale oder einer 3/4-kreisförmigen Schale aufweist.

5. Fühler nach einem der Ansprüche 1 bis 3,
wobei das Formteil (1) eine Öffnung aufweist, in die das Sensorelement (2) eingelegt ist.

6. Verfahren zur Herstellung eines Fühlers nach einem der Ansprüche 1 bis 5,
umfassend die folgenden Schritte:
a) Einlegen eines Formteils (1) in eine Spritzgussform (5, 6)
b) Einlegen eines Sensorelements (2) in das Formteil (1), wobei das Formteil (1) als Zentrierhilfe ausgebildet ist, indem es mit einer geeigneten Wahl der Position des Anspritzpunktes dafür sorgt, dass während des Einspritzens der Spritzgussmasse (3) ein Verrutschen des Sensorelements (2) verhindert wird.

7. Verfahren nach Anspruch 6,
wobei das Sensorelement (2) mit einem Anschlusselement (7) verbunden ist und in Schritt b) so in das Formteil (1) eingelegt wird, dass die Schnittstelle (8) zwischen Anschlusselement (7) und Sensorelement (2) im Formteil (1) zu liegen kommt.

8. Verfahren nach Anspruch 6,
wobei die Spritzgussform (5, 6) so ausgebildet ist, dass das Formteil (1) zumindest in einer Richtung in der Spritzgussform (5, 6) fixiert werden kann.

9. Verfahren nach Anspruch 8,
wobei die Spritzgussform (5, 6) so ausgebildet ist, dass das Formteil (1) mit seiner Außenseite formschlüssig in der Spritzgussform (5, 6) zu liegen kommt.

10. Verfahren nach Anspruch 8,
wobei die Spritzgussform (5, 6) eine stufenförmige Vertiefung (52) aufweist, in die das Formteil (1) eingelegt wird.

11. Verfahren nach Anspruch 8,
wobei die Spritzgussform (5, 6) ein abgerundetes Kopfende (51) aufweist.

12. Verfahren nach Anspruch 6,
umfassend den Schritt
c) Einspritzen von Spritzgussmasse in die Spritzgussform (5, 6) aus einer Richtung, die so gewählt ist, dass während des Einspritzens der Spritzgussmasse das Sensorelement (2) gegen das Formteil (1) gedrückt wird.

13. Verfahren nach Anspruch 6,
wobei die Spritzgussform (5, 6) eine Unter- (5) und eine Oberform (6) aufweist, und
wobei das Formteil (1) in die Unterform (5) der Spritzgussform (5, 6) eingelegt wird.

14. Verfahren nach Anspruch 13,
wobei ein Anspritzpunkt (4), an dem die Spritzgussmasse in die Spritzgussform (5, 6) eingeführt wird, in der Oberform (6) der Spritzgussform (5, 6) angeordnet ist.

15. Fühler nach einem der Ansprüche 1 bis 5,
bei dem die Umhüllung über die gesamte Oberfläche des Sensorelements (2) formschlüssig am Sensorelement (2) anliegt.

## Claims

1. Sensing device for detecting a physical quantity, having a sensor element (2), which is inserted in a molded part (1), the sensor element (2) having an enclosure which is formed by the molded part (1) and an injection-molding compound (3), **characterized in that** the molded part (1) is formed as a centring aid, by the molded part ensuring by suitable choice of the position of the injection point that the sensor element (2) is prevented from slipping during injection of the injection-molding compound (3).

2. Sensing device according to Claim 1, the molded part (1) forming part of the outer contour of the sensing device.

3. Sensing device according to either of Claims 1 and 2, in which the sensor element (2) is connected to a connection element (7) and the interface (8) between the sensor element (2) and the connection element (7) is inserted in the molded part (1).

4. Sensing device according to one of Claims 1 to 3, the molded part (1) having the form of a tube, a tubular half shell or a 3/4-circular shell.

5. Sensing device according to one of Claims 1 to 3, the molded part (1) having an opening in which the sensor element (2) is inserted.

6. Method for producing a sensing device according to one of Claims 1 to 5, comprising the following steps:
a) inserting a molded part (1) into an injection mold (5, 6)
b) inserting a sensor element (2) into the molded part (1), the molded part (1) being formed as a centring aid, by the molded part ensuring by suitable choice of the position of the injection point that the sensor element (2) is prevented from slipping during injection of the injection-molding compound (3).

7. Method according to Claim 6, the sensor element (2) being connected to a connection element (7) and, in step b), inserted into the molded part (1) in such a way that the interface (8) between the connection element (7) and the sensor element (2) comes to lie in the molded part (1).

8. Method according to Claim 6, the injection mold (5, 6) being formed in such a way that the molded part (1) can be fixed at least in one direction in the injection mold (5, 6).

9. Method according to Claim 8, the injection mold (5, 6) being formed in such a way that the molded part (1) comes to lie with its outer side in the injection mold (5, 6) with interlocking engagement.

10. Method according to Claim 8, the injection mold (5, 6) having a step-shaped depression (52), into which the molded part (1) is inserted.

11. Method according to Claim 8, the injection mold (5, 6) having a rounded head end (51).

12. Method according to Claim 6, comprising the step c) injecting injection-molding compound into the injection mold (5, 6) from a direction which is chosen such that the sensor element (2) is pressed against the molded part (1) during the injection of the injection-molding compound.

13. Method according to Claim 6, the injection mold (5, 6) having a lower mold (5) and an upper mold (6), and the molded part (1) being inserted into the lower mold (5) of the injection mold (5, 6).

14. Method according to Claim 13, an injection point (4), at which the injection-molding compound is introduced into the injection mold (5, 6), being arranged in the upper mold (6) of the injection mold (5, 6).

15. Sensing device according to one of Claims 1 to 5, in which the enclosure lies against the sensor element (2) with interlocking engagement over the entire surface of the sensor element (2).

## Revendications

1. Capteur destiné à détecter une grandeur physique, comportant un élément capteur (2) qui est inséré dans une pièce moulée (1), dans lequel l'élément capteur (2) comporte une enveloppe qui est formée par la pièce moulée (1) et une masse de moulage par injection (3), **caractérisé en ce que** la pièce moulée (1) est réalisée sous la forme d'un dispositif d'aide au centrage par le fait qu'elle fait en sorte, par un choix approprié de la position du point d'injection, qu'un glissement de l'élément capteur (2) soit empêché pendant l'injection de la masse de moulage par injection (3).

2. Capteur selon la revendication 1, dans lequel la pièce moulée (1) forme une partie d'un contour extérieur du capteur.

3. Capteur selon l'une quelconque des revendications 1 ou 2,
dans lequel l'élément capteur (2) est connecté à un élément de raccordement (7) et dans lequel l'interface (8) entre l'élément capteur (2) et l'élément de raccordement (7) est insérée dans la pièce moulée (1).

4. Capteur selon l'une quelconque des revendications 1 à 3,
dans lequel la pièce moulée (1) présente la forme d'un tube, d'une demi-coque tubulaire ou d'une coque ayant la forme de 3/4 de cercle.

5. Capteur selon l'une quelconque des revendications 1 à 3,
dans lequel la pièce moulée (1) présente une ouverture dans laquelle est inséré l'élément capteur (2).

6. Procédé de fabrication d'un capteur selon l'une quelconque des revendications 1 à 5, comprenant les étapes consistant à :
a) insérer une pièce moulée (1) dans un moule d'injection (5, 6),
b) insérer un élément capteur (2) dans la pièce moulée (1), dans lequel la pièce moulée (1) est réalisée sous la forme d'un dispositif d'aide au centrage par le fait qu'elle fait en sorte, par un choix approprié de la position du point d'injection, qu'un glissement de l'élément capteur (2) soit empêché pendant l'injection de la masse de moulage par injection (3).

7. Procédé selon la revendication 6,
dans lequel l'élément capteur (2) est connecté à un élément de raccordement (7) et en ce que, lors de l'étape b), il est inséré dans la pièce moulée (1) de manière à ce que l'interface (8) entre l'élément de raccordement (7) et l'élément capteur (2) vienne à être placée dans la pièce moulée (1).

8. Procédé selon la revendication 6,
dans lequel le moule d'injection (5, 6) est réalisé de manière à ce que la pièce moulée (1) puisse être immobilisée dans au moins une direction dans le moule d'injection (5, 6).

9. Procédé selon la revendication 8,
dans lequel le moule d'injection (5, 6) est réalisé de manière à ce que la pièce moulée (1) vienne à être placée dans le moule d'injection (5, 6) par complémentarité de forme avec sa face extérieure.

10. Procédé selon la revendication 8,
dans lequel le moule d'injection (5, 6) présente un évidement (52) échelonné dans lequel est insérée la pièce moulée (1).

11. Procédé selon la revendication 8,
dans lequel le moule d'injection (5, 6) présente une extrémité de tête arrondie (51).

12. Procédé selon la revendication 6, comprenant l'étape consistant à
c) injecter une masse de moulage par injection dans le moule d'injection (5, 6) dans une direction qui est sélectionnée de manière à ce que, pendant l'injection de la masse de moulage par injection, l'élément capteur (2) soit comprimé contre la pièce moulée (1).

13. Procédé selon la revendication 6,
dans lequel le moule d'injection (5, 6) comporte un moule inférieur (5) et un moule supérieur (6), et
dans lequel la pièce moulée (1) est insérée dans le moule inférieur (5) du moule d'injection (5, 6).

14. Procédé selon la revendication 13,
dans lequel un point d'injection (4) à l'emplacement duquel la masse de moulage par injection est introduite dans le moule d'injection (5, 6) est disposé dans le moule supérieur (6) du moule d'injection (5, 6).

15. Capteur selon l'une quelconque des revendications 1 à 5,
dans lequel l'enveloppe est disposée sur l'élément capteur (2) par complémentarité de forme sur la totalité de la surface de l'élément capteur (2).
